(19) Europäisches Patentamt

European Patent Office

Office européen des brevets

(11) EP 0 769 887 B1

(12) **EUROPEAN PATENT SPECIFICATION**

(45) Date of publication and mention
of the grant of the patent:
**22.12.2004 Bulletin 2004/52**

(51) Int Cl.[7]: **H04Q 11/06**

(21) Application number: **96116279.9**

(22) Date of filing: **11.10.1996**

(54) **PCM elementary switching matrix**

PCM elementare Schaltmatrix

Matrice de commutation élémentaire de signaux MIC

(84) Designated Contracting States:
**DE FR NL SE**

(30) Priority: **20.10.1995 IT MI952161**

(43) Date of publication of application:
**23.04.1997 Bulletin 1997/17**

(73) Proprietor: **Italtel s.p.a.**
**20154 Milano (IT)**

(72) Inventors:
• **Maranini, Odo**
**20127 Milano (IT)**
• **Beccari, Marco**
**20090 Buccinasco (MI) (IT)**

(74) Representative: **Pellegri, Alberto et al**
**c/o Società Italiana Brevetti S.p.A.,**
**Piazza Repubblica 5**
**21100 Varese (IT)**

(56) References cited:
**US-A- 4 485 467**    **US-A- 4 543 653**
**US-A- 5 343 467**

• **BARBAGALLO S ET AL: "TESTING A**
**SWITCHING MEMORY IN A**
**TELECOMMUNICATION SYSTEM"**
**PROCEEDINGS OF THE INTERNATIONAL TEST**
**CONFERENCE (ITC),US,NEW YORK, IEEE, 21**
**October 1995 (1995-10-21), page 947-956**
**XP000552901 ISBN: 0-7803-2992-9**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

Field of the Invention

The present invention relates to a PCM (Pulse Code Modulation) switching system and particularly to a PCM switching matrix, integrated and structured in order that the bit-rate of each input and/or output flow can be separately programmed.

The switching function of incoming PCM channels on outgoing PCM channels is made through connection networks of the commercial type in the modern digital switching telephone exchanges.

To the purposes of network expansions and for cost-saving reasons, special integrated circuits have been developed employing the fundamental functions of PCM switching, each one with a given switching capacity, which can be associated between them according to a modularity principle and connected according to methods which are well known by the skilled in the art, to implement a switching network having the desired capacity.

Each integrated device or PCM switching matrix is generally supplied with a set of serial to parallel converters for a given number of incoming flows, each flow being divided (in terms of time) into a plurality of channels, through which coded voice signals or data are transmitted.

A signal or data memory enables to store the digital samples of the different incoming channels.

A second memory (command memory) stores the different current connection commands of an outgoing channels at a given incoming channel acting in practice as pointing element of data reading addresses stored in the data memory for each outgoing channel. A set of parallel to serial converters generates the relevant outgoing serial flows. A control and timing logic circuit governs the different circuit blocks of the elementary matrix under the control of a microprocessor supervising the switching process of the whole network.

Background Art

Integrated elementary matrixes are described in the European patent No. EP 39948 of 13th May 1980, in the name of CSELT- Centro Studi e Laboratori Telecomunicazioni s.p.a. and in the European patent No. EP 89683 of 24th March 1982, in the name of CSELT- Centro Studi e Laboratori Telecomunicazioni s.p.a.

US-A-4,543,653 discloses a modular self-routing PCM switching network including means for cyclically checking the correctness of the established connections in a continuous manner.

Devices already known show important restrictions and disadvantages.

The required inspection of data integrity- based on the control of coincidence of the data of an input channel and data of an output channel for a given input channel/output channel connection - is made using auxiliary devices and essentially in an intermittent way. In particular this check is made following a control of the microprocessor controlling the switching matrix, involving therefore a non neglectable load for this last.

If flows of data they receive at input are not time aligned, they require the presence of elastic memories of large dimensions.

They do not allow switching with a unique instruction of a whole data flow.

They do not enable the simultaneous synchronization of several remote receivers.

Scope of the Invention

Scope of this invention is therefore to overcome the disadvantages and restrictions of known devices and to implement a system and relevant elementary PCM switching matrixes offering also important advantages versus the known devices, as it shall be highlighted in the following description.

Disclosure of the Invention

In accordance with the present invention, a PCM switching system is claimed employing a plurality of elementary switching matrixes controlled by a control microprocessor, each elementary matrix enabling the switching of any one of a number K of channels of any N input flows on one of the H channels of one of the elementary matrix output M flows according to a connection control and including to this purpose a first RAM memory (*speech memory*), organized in a plurality of blocks, each one of them suitable to control a fractional number of said N input flows, and a second control RAM memory (*command memory*), characterized in that in said second RAM memory (*command memory*), the control of connection is cyclically made in a continuous way comparing one byte captured from the relevant incoming and one byte captured from the relevant outgoing channel in which said byte has been transferred.

According to the invention is also claimed a PCM switching elementary matrix for a number N of input flows, each one containing a number K of channels and a number M of output flows containing a number H of channels, including a serial/parallel converter for each one of said N input flows, at least one first RAM memory (*speech memory*) to store, in a same number of addressable portions of the same, numeric samples of the different channels of said input flows, at least one second RAM memory (*command memory*), to store the connection combinations between said pluralities of channels incoming and outgoing as pointing addresses of the relevant data stored in said first RAM memory, a parallel/serial converter for each one of said output flows, a control logic circuit for said connections, an interface circuit with microprocessor for connection control, characterized in that it includes checking means consisting of a logic circuit slaved to an external microprocessor for the control of the switching network, suitable to cyclically control all the connections stored in said second memory (*command memory*) and to check the correct transfer of data from one of said incoming channels to the currently selected outgoing channel.

Brief Description of the Drawings

The features of the present invention which are believed to be novel are set forth with particularity in the appended claims. The invention, together with further objects and advantages thereof, may be understood with reference to the following description, taken in conjunction with the accompanying drawings and in which:

**Figure 1** is a block diagram of an elementary programmable matrix, implemented according to the present invention;
**Figure 2** shows the BR_DT of Fig. 1 in detail;
**Figure 3** is a partial diagram of the BP_MFE unit of Fig. 1;
**Figures 4 and 5** show time diagrams of the storing process of data reaching the input of the BP_MFE unit implemented according to Fig. 3, considering that with the dotted line sloping rightward, or leftward respectively, we have indicated bit 8 of the last frame channel stored in the last bistable of the S/P register, or bit 0 of channel 0 stored in the first bistable of the S/P register, respectively.
**Figure 6** shows a diagram of any possible combination of number of flows and relevant bit-rates for the assumed embodiment example;
**Figure 7** is a partial diagram of the BP_GFU unit of Fig. 1;
**Figure 8** is a partial diagram of the writing/reading portion of the command memory foreseen in the BP_GFU unit of Fig. 1;
**Figures 9 and 10** show time diagrams of the BP_GFU unit in Fig. 1;
**Figure 11** shows a diagram of the BRSS unit in Fig. 1;
**Figure 12** shows in detail the BCC unit in Fig. 1;
**Figure 13** shows time diagrams of the control of one connection made by the BCC unit in Fig. 1;
**Figure 14** shows an embodiment of the BIM unit in Fig. 1;
**Figure 15** shows the timing of input and output flows of a switching matrix implemented according to the present invention;

Detailed description of a preferred embodiment of the Invention

As said above, the maximum number of input flows can be increased as desired, foreseeing the presence of a significant number of RAM memory blocks, for instance 1K addressing. From the studies conducted by the Applicant, it resulted that the use of six RAMs or RAM memory blocks having 1 K addressing capacity for the storing of data at a max. bit-rate of 32 Mbit/s and therefore to set a maximum of 24 input flows and 24 output flows, was a reasonable project option. Therefore, data stored relevant to four input flows are stored in each block of RAM memory.

Peferably, the external clock frequency which can be applied to the device can take multiple values, such as for instance 32 MHz, 16 MHz or 8 MHz. The value of the clock frequency applied to the device shall always be programmed at any reset.

The selection of the clock applied to the device determines a consequent availability of some given bit-rates, which can be assigned through programming to the different input and output flows. This correlation is also indicated in the following table where the relevant programming codes are also indicated.

| code and frequency of applied ck | | codes of link possible bit-rates | | | | | | |
|---|---|---|---|---|---|---|---|---|
| | | 32Mbit/s | 16Mbit/s | 8Mbit/s | 4Mbit/s | 2Mbit/s | 1Mbit/s | 0,5Mbit/s |
| 11 | 32MHz | 010 | 011 | 100 | 101 | 110 | not allowed | not allowed |
| 10 | 16MHz | not allowed | 011 | 100 | 101 | 110 | 010 | not allowed |

(continued)

| code and frequency of applied ck | | codes of link possible bit-rates | | | | | | |
|---|---|---|---|---|---|---|---|---|
| | | 32Mbit/s | 16Mbit/s | 8Mbit/s | 4Mbit/s | 2Mbit/s | 1Mbit/s | 0,5Mbit/s |
| 01 | 8MHz | not allowed | not allowed | 100 | 101 | 110 | 010 | 011 |
| 00 | xxxx | LINKS WHICH CANNOT BE USED | | | | | | |

The local synchronization signal (SYNC) must have a duration pulse equal to the period of the clock applied to the device and 8KHz frequency.

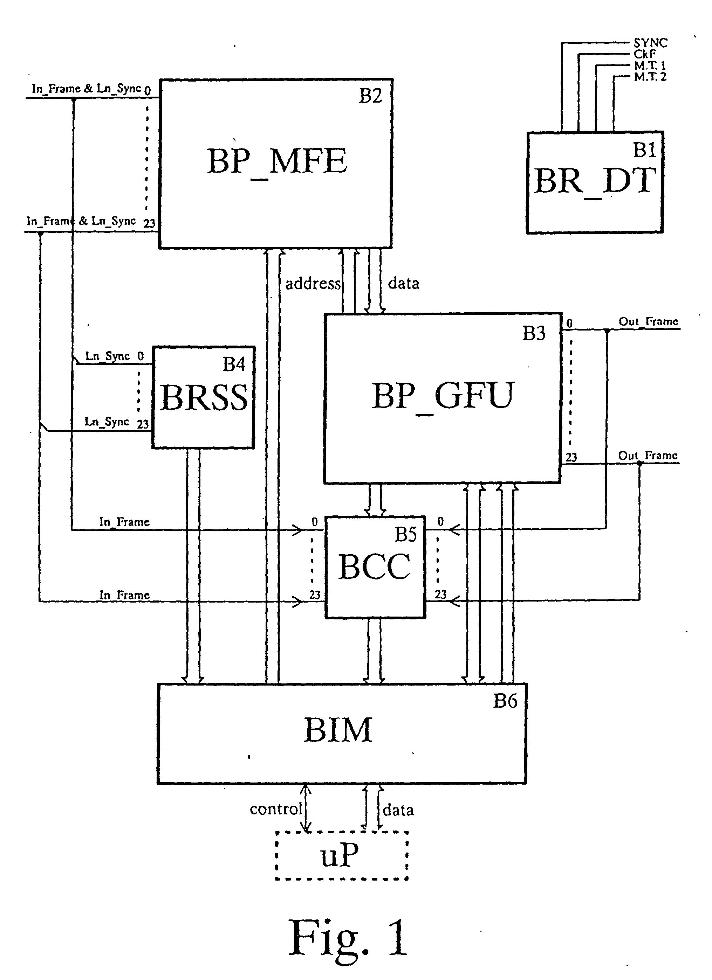

The elementary matrix essentially consists of six main functional blocks, shown in Fig. 1.

Receipt and Timing Distribution Block BR DT

This circuit block receives a clock signal CkF and an 8KHz synchronization signal SYNC from the outside, from which it obtains all timing signals for the different internal functional block of the elementary matrix. Preferably, the block can also receive two time marks from the outside M.T.1 and M.T.2 and, after synchronization of the same, they are sent during the next synchronization signal to the BP_GFU block to be inserted on all outgoing flows.

Block for Programming & Storing of Incoming Flows BP_MFE

This block essentially contains the data memory, which according to the above mentioned preferred embodiment, consists of six RAMs or RAM blocks, 1K addressing each, forming the so-called *speech-memory*. The programming of the bit-rates relevant to two adjacent flows for a maximum of 12 total programming, in the example shown, is received by the Microprocessor Interface Block BIM, described hereafter more in detail. As it shall be stated in the description, in the case of the example shown, each programming of the 32Mbit/s bit-rate is permitted only for the first of the two adjacent flows. In practice only flows of pair order can treat 32 Mbit/s bit-rates since in this case the odd order ones are not used for lack of memory, being this one completely used by the pair flow (if it is programmed at the maximum bit-rate foreseen of 32 Mbit/s). Said block receives also PCM flows and relevant line synchronization signals In_Frame&Ln_Sync0, ...., In_Frame&Ln_Sync23 (Input Frame / Line Sync) required to preset the relevant channel counters, directly from the external pins of the device.The BP_MFE block transfers the content of cells pointed by the BP_GFU block through emission of addresses on the bus ADD, as data DATA to said BP_GFU block described below in detail.

Block for Programming & Storing of Outgoing Flows BP_GFU

This block essentially contains the command memory (*command- memory*). It receives from the Microprocessor Interface Block BIM the programming of bit-rates relevant to two flows, for a maximum of 12 programming and the indication of connections to be made.

Since the maximum capacity of the command memory is 4,096 cells, considering the technological restrictions mentioned above, the higher is the number of flows programmed at the maximum bit-rate, the lower is the number of flows which can be controlled.

Block for Detection of Synchronization Phase Shifting BRSS

This block periodically measures the time phase shifting if line synchronizations Ln_Sync0, ..., LnSync23 (the relevant time position of channels having the same order number on the different flows) versus the local synchronization SYNC supplied by the BR_DT block. If a given phase shifting results changed compared to the previous scanning, communication is given to the microprocessor μP.

Connection Control Block BCC

According to a preferred embodiment, the invention includes also this block which continuously and periodically checks all the connections stored in the command memory and checks the correct transfer of data from the particular incoming channel In-Frame to the outgoing channel presently selected OutFrame.

If the comparison between input and output data is correct, the circuit restarts the check of the next connection; in the contrary instance it supplies the microprocessor μP with the information of the connection resulting not correct. Only after acquisition of data relevant to said information by the microprocessor, the circuit performs the check of other connections in sequence.

Microprocessor Interface Block BIM

This circuit block contains the control logics to dialogue with the different blocks mentioned above and can be directly connected to a commercial microprocessor μP, (for instance of the 68000 Motorola family) with data bus at 16 bits.

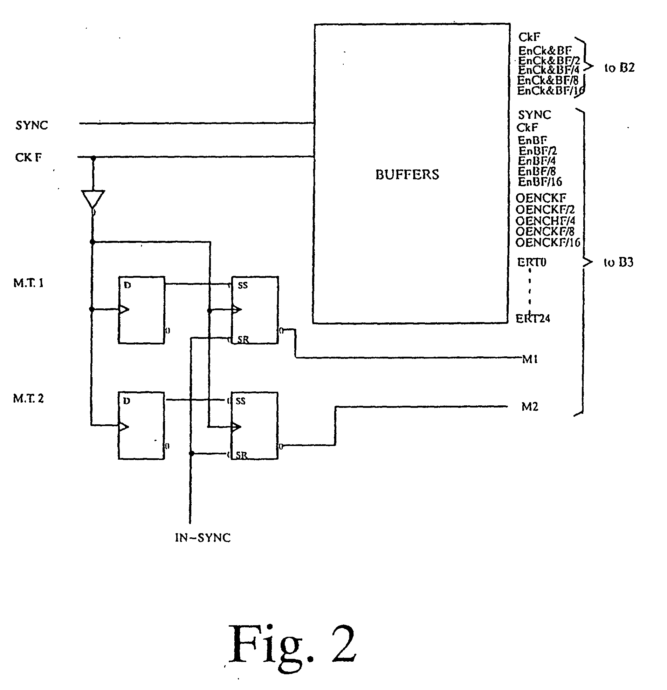

We shall now describe in detail the above mentioned units, starting from the BR_DT block, shown in detail in Fig. 2.

*BR_DT Block - Receipt and Timing distribution Block*

The 8KHz synchronization signal SYNC and a clock signal CkF whose frequency F can be for instance 32 MHz, 16 Mhz or 8 MHz, are received from the outside, as shown in figure 2.

The circuit generates and distributes the following timing signals:

- CK and BYTE ENABLE for any programmable bit-rate of incoming flows of the BP_MFE block EnCk&BF1;
- CK and BYTE ENABLE for any programmable bit-rate of outgoing flows from the BP_GFU block, EnBFx, OENCKFx, ERTx;
- loading LOAD for the 24 Buffer registers relevant to a same number of output flows of the BP_GFU block;

As shown in the diagram, the BR_DT block can also receive, always from the outside, two time marks MT1 and MT2 (active at low level) with time not lower than 125μ and not matching the synchronization pulse. The presence of time marks is sampled by the clock and they are sent to the BP_GFU block where the synchronization signal inserts them in the fourth and fifth bit of the first time-slot TS0, corresponding to the first outgoing channels of the relevant output serial flow.

*BP_MFE Block for Programming and Storing of Incoming Flows*

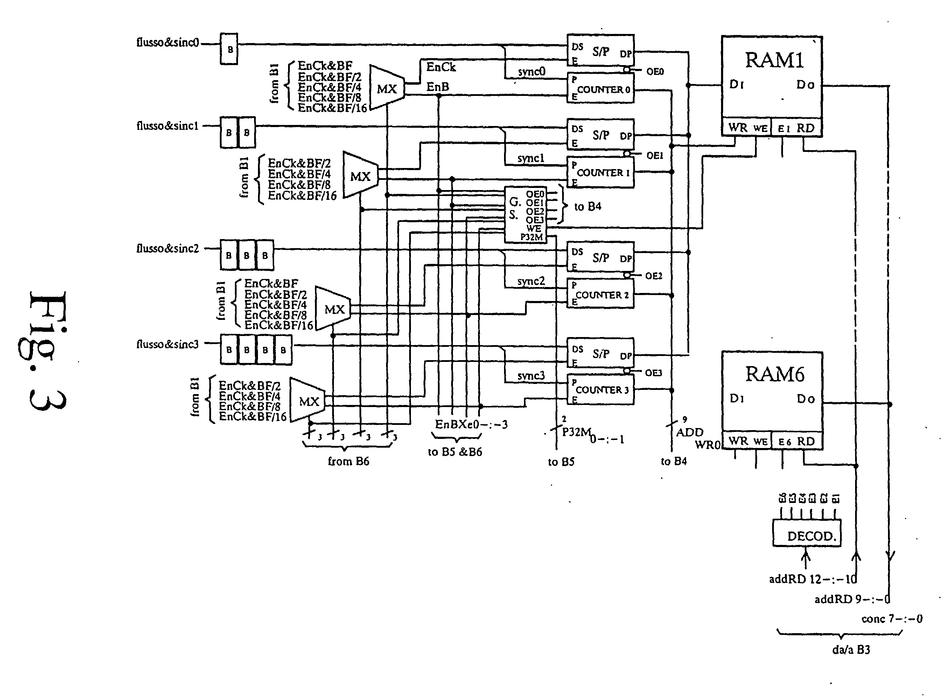

The architecture of this block is shown in detail in Fig. 3 for the first of the six 1 Kbyte memory blocks RAM1, ..., RAM6 double addressable port, WR and RD respectivelyç the scheme being recurring for the six RAMs forming the *speech memory*.

Reading ports RD are controlled by the addRD address, periodically drawn by the command memory (*command memory*) of the BP_GFU block to which the information contained in the addressed cell shall be sent as described below.

The control circuit of WR writing ports manages four flows, incoming ones for the example considered having each one a given bit-rate which can be different from the other one. The bit-rate programming involves two adjacent flows at the same time. Concerning each pair of flows, if the first flow is programmed at the maximum bit rate of 32Mbit/s, the second flow is automatically inhibited to the writing of the RAM memory.

All the components, except for MX multiplexers, receive the relevant clock (CkxF) at programmed frequency, even if this is not always shown on the figures.

EnCkxx and EnBxx signals enable the component to operate coinciding with the relevant clock front, for the bit time and for the byte time, respectively.

Each serial/parallel converter (S/P) can consist of a register receiving on DS the serial flow and makes the channel available on the 8 bits parallel data bus DP.

Each counter (COUNTER) associated to each input line, gives the writing address of the channel to which the current information on the data bus DP belongs. Counters prepare for the use of their concerned RAM memory area according to the programmed bit-rate of the relevant input flow.

Multiplexers MX receive all timing signals required by the BR_DT block and selecting the requested timing according to the programming received by the BIM block.

Signals EnBXe0=-:3, selected to enable the relevant channel counters (COUNTER), preset by the line synchronisation (syncX), are sent also:

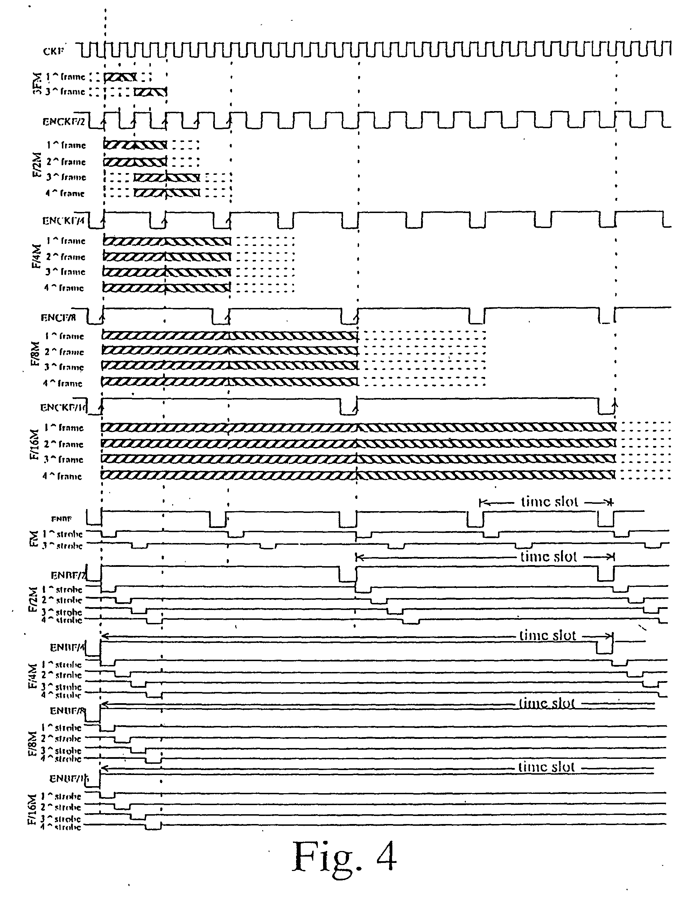

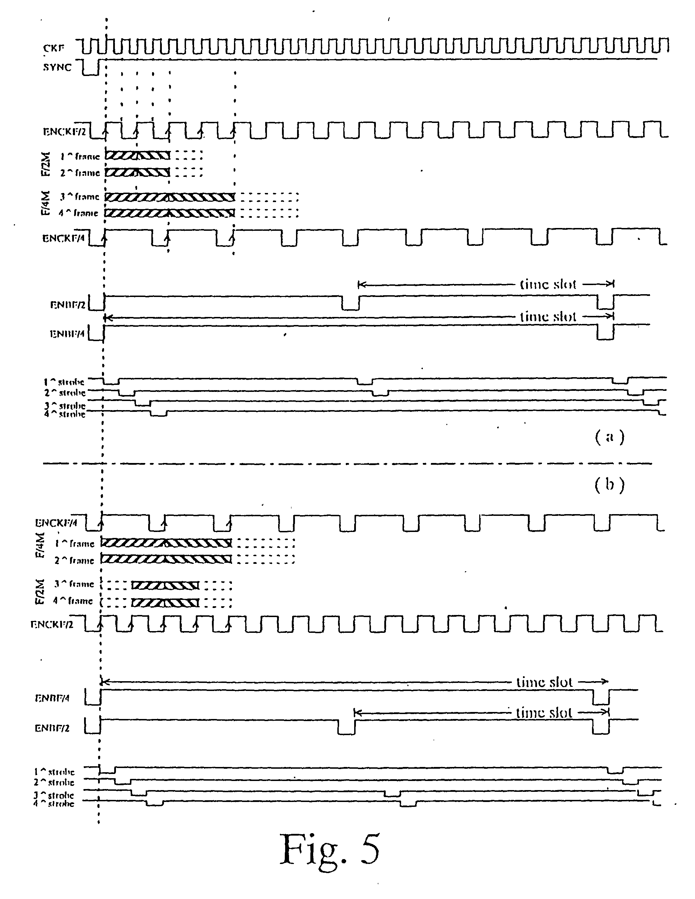

- to the BIM block, where a centralized circuit employs the same to reconstruct the programming of the bit-rate to supply to the microprocessor when required by the same as acknowledgement of the programming made;
- to the BCC block to implement the connection control with the appropriate timing;
- to the *strobe* generation logic (G.S.) to generate writing enabling strobes in RAM with the relevant WE pulses (strobe of fig. 4 and 5). This logic locks the strobe OE1 if the bit-rate of the first programmed flow is 32Mbit/s and locks the strobe OE3 if the bit-rate of the third flow is 32Mbit/s, in order to disable a second flow of each pair having the first flow programmed at the maximum bit-rate of 32Mbit/s.

Bistable circuits B have the function to phase shift the incoming flows at the input of the relevant converters S/P in order that these last supply data on the parallel data bus DP, in different times to enable their writing (necessarily in sequence) without requiring the use of elastic memories (writing buffers). Only the first input bistable circuit of each flow samples with the negated front of the relevant clock signal CkxF. Bistable circuits added in cascade and in gradually increased number to the first bistable sampling circuit have the scope to introduce a clock time delay on the second flow, of two clock periods on the third and of three clock periods on the fourth flow.

Timing diagrams of the block are shown in Figures 4 and 5. In Fig. 4 it is shown the case of four input flows reverting to the same RAM, each one programmed at a different bit-rate. In Fig. 5 it is shown the case where the first two flows (upper part of the figure) are programmed at 16Mbit/s bit rate and the second one at 8 Mbit/s, respectively while for the other pair of flows (lower part of the figure), the first flow is programmed at 8 Mbit/s while the second one at 16Mbit/s.

Diagrams of Fig. 5 show how writing *strobes* are generated, according to the programmed bit-rate. Strobes are generated every 8 bits and their time position remains rigidly bound for each flow.

*BP_GFU BLOCK - Block for Programming and Control of Outgoing Flows*

For the generation of outgoing flows, this block avails of a (*command-memory*) having a capacity of 4Kword, 16 bits, which is implemented with eight 0,5Kword RAMs.

Also these eight RAMs avail of double port, a reading only port RD and a writing and reading port WR/RD microprocessor controlled through the BIM interface block:

The reading port RD of each RAM memory block is addressed by the SFU output phase scanning (or channel) circuit which is constantly increased with the clock signal in order to address the cells of the *speech-memory* within a time of 125μs of frame.

The content of addressed cells of the *speech-memory* can be transmitted in any time-slot (T.S.) of one of the 24 output flows foreseen (as maximum number) in the example described.

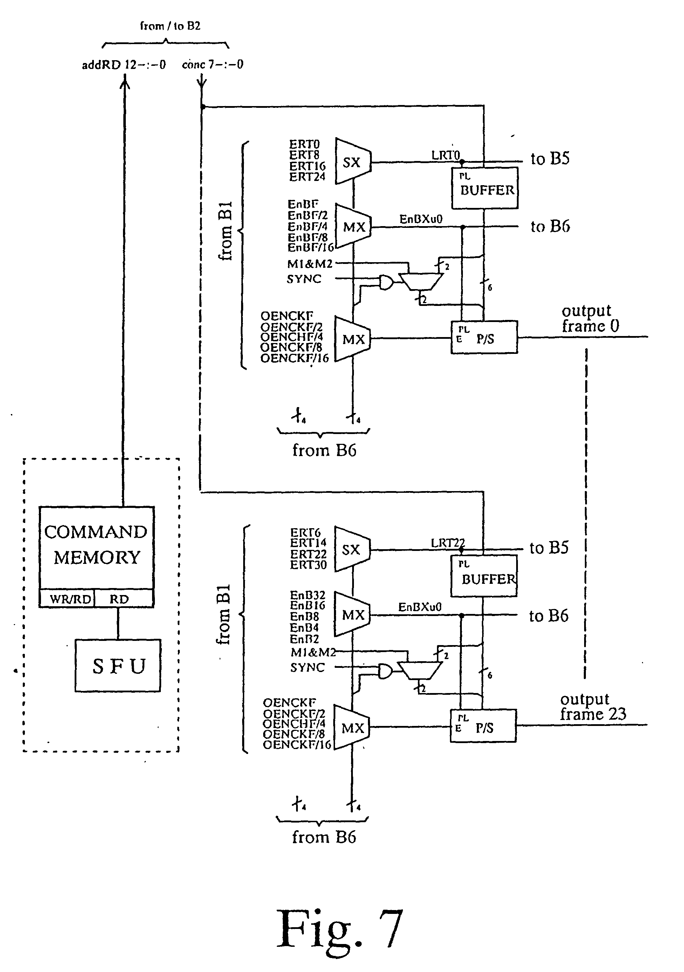

Actually, each output flow avails of a circuit identical to that shown in Fig. 7.

For a correct understanding of the circuit, we point out that:

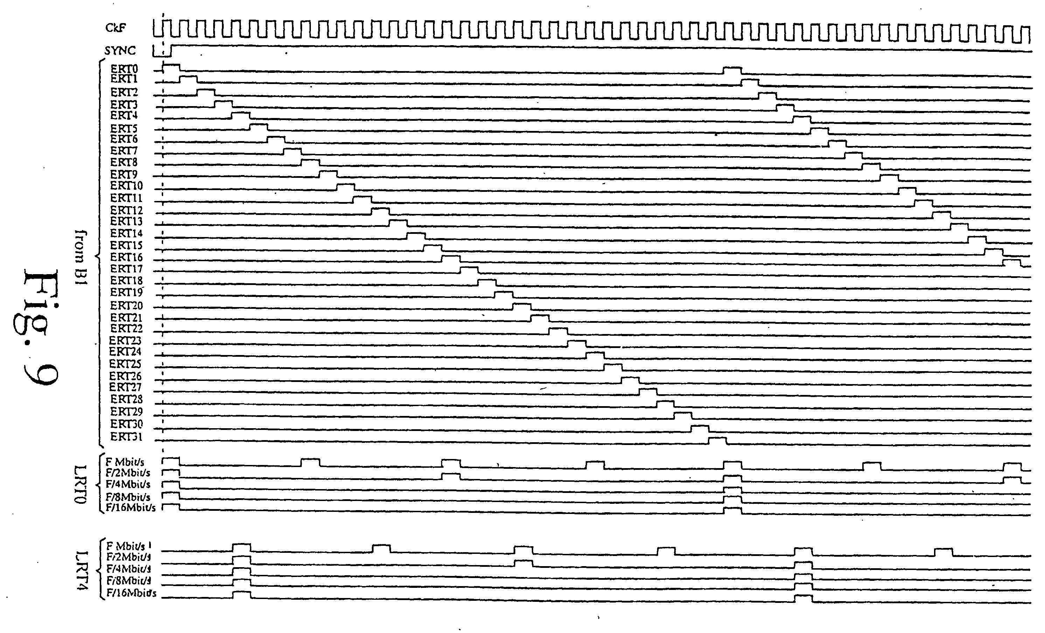

- all the components, except for SX selectors and MX multiplexers, receive the relevant programmed clock signal CkxF, even if not indicated in the diagram of the figure;
- SX is a selector suitable to form the LRTx signal, employing one or more signals available at input, according to the programmed bit-rate.
- each buffer register RT associated to a given outgoing flow, receives an enabling signal LRTx to store the datum present on bus conc7-:-0, as shown in Fig. 9, where LRT0 and LRT4 are highlighted according to the programmed bit-rate;
- each parallel/serial converter P/S consists of a register suitable to store the parallel datum coming from the buffer register and serialize it at output according to the programmed bit-rate;
- the programming of the bit-rate of each output flow, coming from the BIM block, contains also a bit to enable the insertion in the time-slot (channel) zero (TS0) of the above mentioned two time marks M1 and M2.

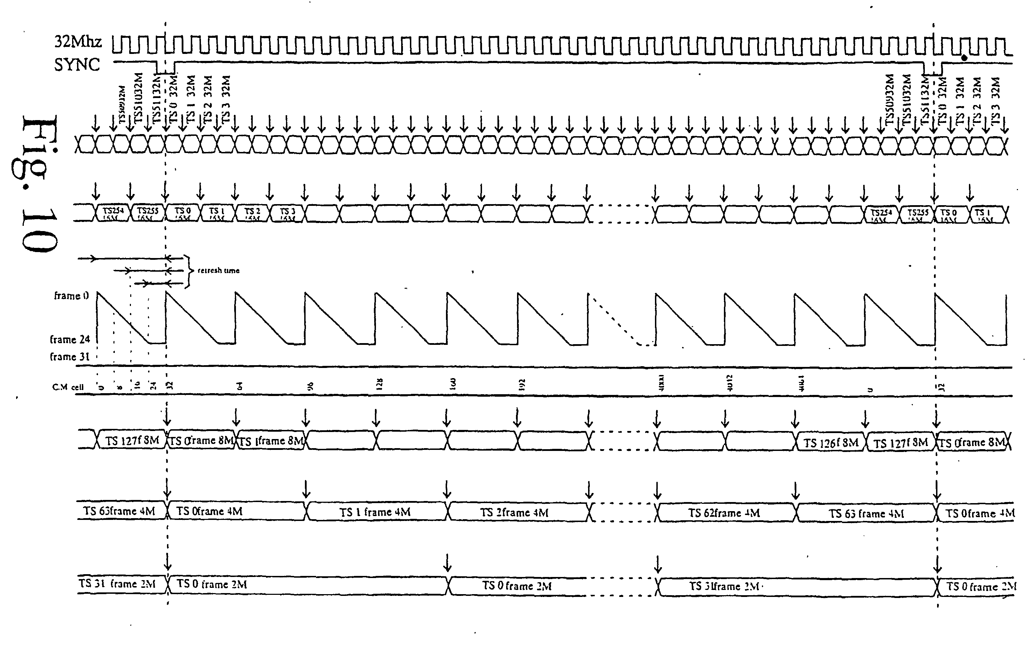

Making reference to time diagrams in Fig. 10, assume that all outgoing flows are programmed at 8 Mbit/s bit-rate (this condition is represented in the central highlighted area of Fig. 10). During the updating of buffer registers, all the 24 registers are loaded each with the content of its channel to transfer. At any byte time (indicated with arrows downward) all P/S registers are simultaneously loaded so that the corresponding channels of the different flows are all transmitted at the same time.

The central band of Fig. 10 indicates the address of the *command-memory* cells by the scanner of outgoing phases SFU pre-set at 32 by the SYNC signal.

Observing the relation existing between the addressing of cells and data transmission through output flows, we can notice that the address of the incoming channel to be transferred to the outgoing channel or time-slot (TS) is contained in different cells, depending on the programmed *bit-rate*.

More in particular, in the example shown, the addresses of channels to transfer in time slots TS1 shall be in cells 32-:-55 for 8 Mbit/s flows, in 64-:-87 cells for 4 Mbit/s flows and in 128-:-151 cells for 2 Mbit/s flows.

If bit-rates higher than 8Mbit/s are programmed, being 4,096 the cells available in the *command-memory* the updating time of buffer registers (whose useful number decreases) is reduced and of course also the number of flows which can be employed.

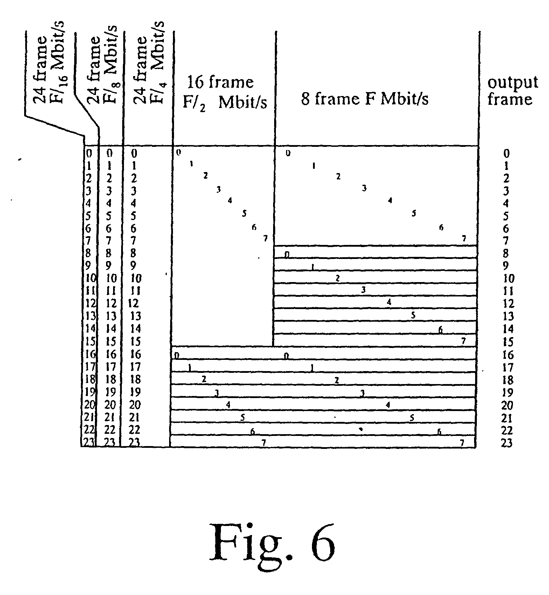

The table shown in Fig. 6 briefly highlights the number of flows which can be employed according to the programmed bit-rate and flows repeated among them.

In other words said table aims at highlighting that, in the frame time of 125µs, assuming as above that the number of cells of the command memory totals to 4096 cells, the content of 4096 channels is available at output in said frame time to control No. 8 flows at speed F. If flows are 16, the content of the same quantity of cells is available at output at a lower speed equal to F/2.

To identify the *command-memory* cell where the address of the incoming channel to be drawn by the *speech-memory* has to be written we can apply the following formula:

$$\mathrm{ADD}_{\mathrm{cella}}\ (F\&CO) = \frac{8F}{C}\cdot C{+}f$$

where: F is the frequency of the clock used expressed in Mhz, B is the bit-rate of the outgoing flow, C is the number of outgoing channels and f is the number of outgoing flows.

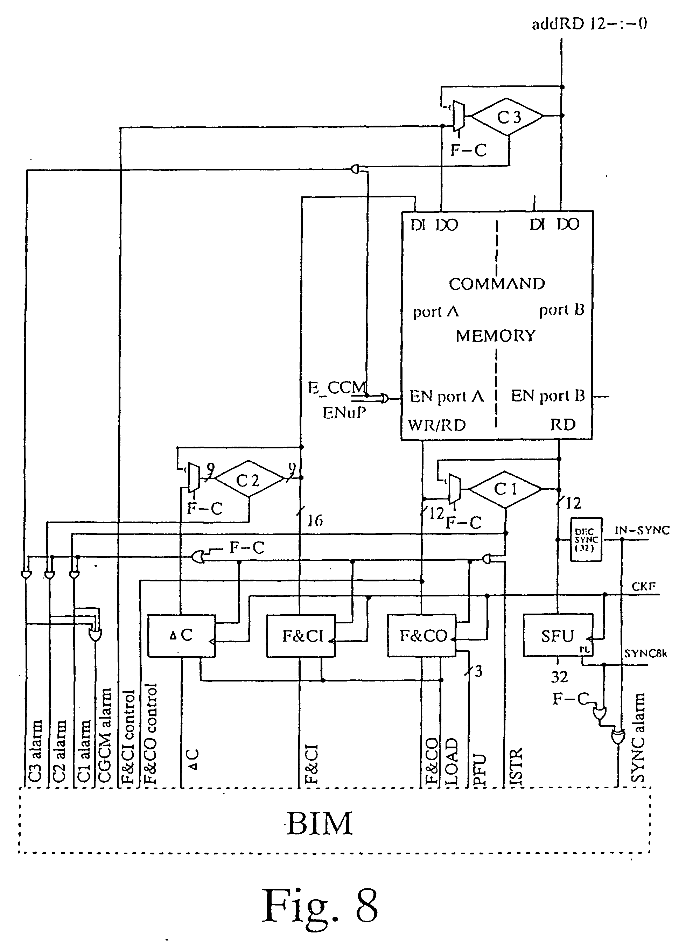

The control diagram of the *command-memory* is shown in fig. 8.

The SFU block (Outgoing Phases Scanner) can be implemented on a 12 bit$_{MAX}$ counter suitable to continuously read in sequence the relevant cells of the *command-memory* to form the different PCM flows outgoing from the switching elementary matrix. The counter can be preset by the synchronization signal 8khz SYNC8k at value 32, while the progress clock signal is the external clock signal applied at the CkF device. The IN_SYNC signal is an internal regenerated synchronization signal.

The F&CO block implements a 12 bit$_{MAX}$ register/counter, where the interface block with the microprocessor writes the address of the cell to be written in the command memory, coinciding also with the Flow&Output Channel. If it is the case of an I.C.A. instruction (Adjacent Channel Instruction) then the interface block enables also a 3 bit code (PFU) to indicate the bit-rate of the concerned output flow, in such a way that the F&CO block becomes a counter which at any clock pulse increases by 8, 16, 32, 64 or 128 if the programmed bit-rate is F, F/2, F/4, F/8 or F/16 Mbit/s, respectively.

The F&CI block implements a 16/9 bit register/counter (no. 16 bits when operating as register and no.9 bits when operating as counter), where the interface deposits the information to be written in the cell identified by F&CO. If it is the case of an I.C.A. instruction then the F&CI block becomes a counter in order to increases the number of input channel to be switched.

∆C is a counter where the interface loads the number of concerned channels, in case of I.C.A. instruction only. This counter, generally locked on pace 0 keeps the counter function of F&CO and F&CI blocks locked. The interface loads all the three blocks at the same time (∆C, F&CO and F&CI) and if the ∆C block is loaded at a value different from 0, then F&CO and F&CI blocks progress while ∆C goes back up to return on pace 0.

When no instruction involving the *command-memory* is required, C1 and C2 comparators control in real time the correct operation of SFU with F&CO and of F&CI with ∆C, respectively.

When said blocks are used to execute an instruction, the ISTR signal locks the counters which are loaded with the LOAD signal at the desired value and the consequent alarms of comparators C1, C2 and C3. After the writing of the *command-memory*, the ISTR signal is newly enabled, ∆C and D&CI blocks are reset and only when SFU reaches the same pace of F&CO, C1 and C2 alarms shall be newly enabled.

The comparator C3 is used to control the drivers of the *command-memory*. To limit the component dissipation, drivers of port A are enabled by the E_CCM signal enabled by appropriate cyclic test.

The F-C signal imposes complemented data at input of comparators in order to have the possibility to check the effectiveness.

For the control of the *command-memory* cells, it can be foreseen that a cyclic test can enable, even in on-line operation, a check made through the BIST devices implemented for the checks generally made in the acceptance phase *(incoming).*

*BRSS BLOCK - Synchronization Phase Shifting Detection Block*

As already mentioned in the general description, this block performs phase shifting measurements (expressed in T.S.) between line synchronization syncX belonging to the different flows and the local synchronization IN_SYNC on which the whole operation of the implemented matrix is based.

In practice, for each programmed incoming flow, the address of the channel stored in the S.M. is supplied coinciding with the local synchronization IN_SYNC.

This function enables to determine which connection has to be made to obtain the lower (or higher) switching delay.

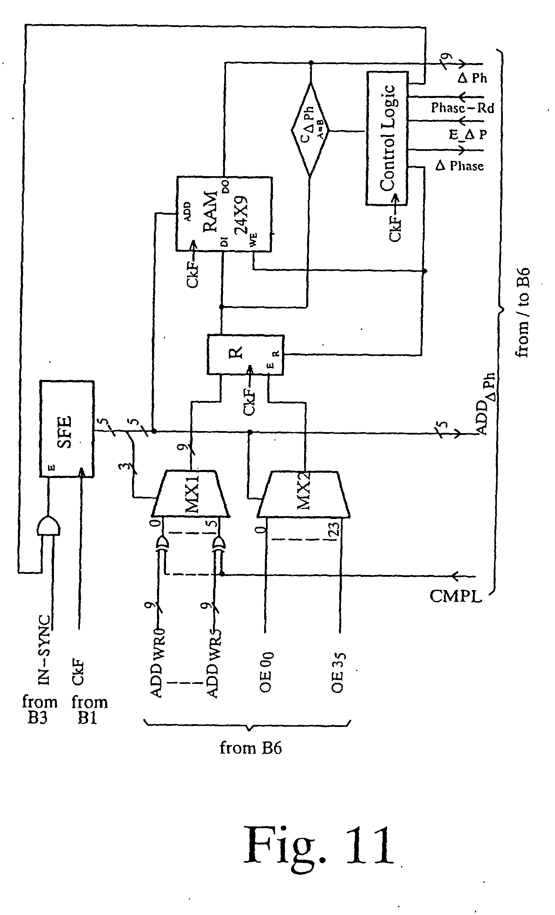

Making reference to Fig. 11, this block includes:

- a Scanner of Incoming Flows SFE selecting the content of one of the 24 channel counters (COUNTER) present in the BP_MFE block ($ADD_{WRx}$ & $OE_{Xy}$) through multiplexers MX1 and MX2;
- a register R storing the content of the counter selected by the scanner;
- a 24x9 RAM (reset at power-on) containing the previous content of the 24 channel counters, showing at output the last reading of the counter selected by the scanner;
- a comparator C, comparing the pace of the counter just stored in the register R with the previous detection contained in the relevant memory cell;
- a control logic which, according to the result of the comparison made by the comparator, enables (if A=B) the progress of the scanner to select and analyze the next counter; in the contrary instance it keeps the scanner locked, updates the RAM with the new counter value, resets the register R and informs the controller (through ΔPhase signal) that a variation in the phase shift of a line synchronization (syncX) versus the local synchronization IN_SYNC has been detected.

The μP can now read the status of the scanner and the RAM output to store to which flow the phase shifting detected refers.

Afterwards, the μP shall communicate to have acquired data, enabling the Phase-Rd signal, necessary to the control logic to remove the lock from the scanner, which at the next local synchronization, shall point the selection of the subsequent flow counter.

The microprocessor can operate on this circuit through two commands:

1) the E_ΔP signal to enable the whole circuit (disabled at power-on)
2) the CMPL signal to complement the addresses of channel counters in order to check the correct functionality of the whole circuit.

*BCC CLOCK - Connection Control Block*

This block implements a circuit capable to check, *on line*, the actual execution of connections stored in the *command-memory* and the correct *bit-rate* of input flows used.

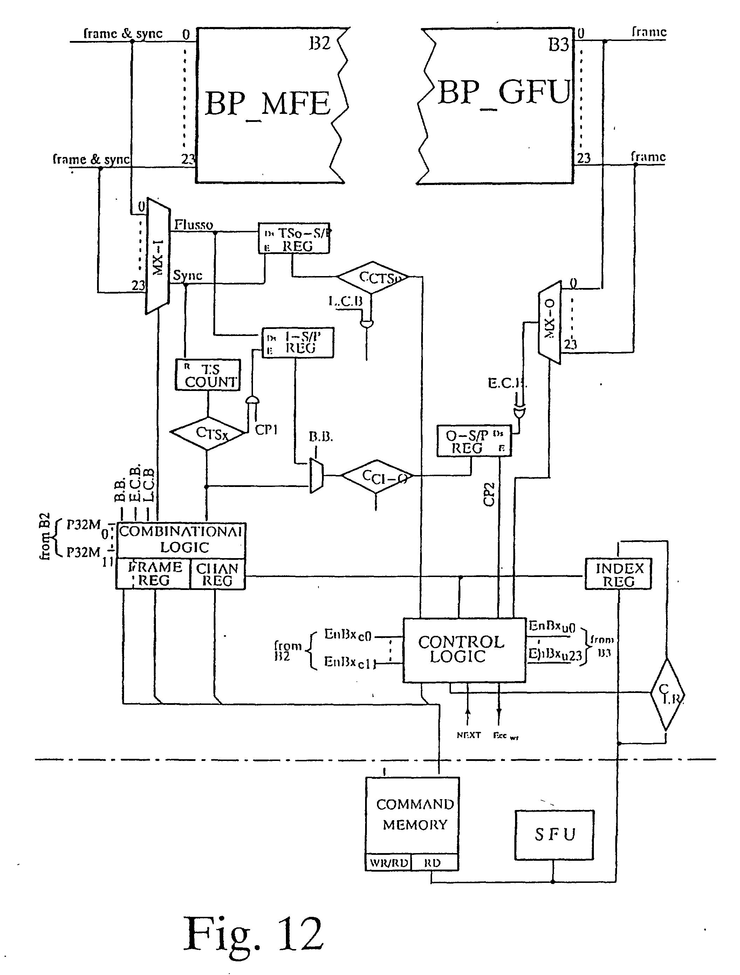

Referring to Fig. 12 we can notice that this control circuit is based on the content of the cells of the *command-memory* whose functionality is assured by the checks described above.

As shown in Fig. 12, each cell avails of three control bits, in addition to input channel and flow indications, namely:

- Busy-bit (B.B.) to establish the connection
- the Error Connection Bit (E.C.B.) to force a false condition of wrong connection
- the Link Control Bit (L.C.B.) to enable also the *bit-rate* control of the flow received during the normal control of a given connection.

When a given cell shows the *busy bit* B.B., the control logic stores the content of said cell in FRAME&CHANNEL registers and its address in the INDEX register. In consideration of P32M signals coming from each circuit of the block BP_MFE, the combinatory logic prepares MX-I to select:

- the flow
- the synchronization
- the relevant ck(bit) and Byte timing signals (not highlighted in the figure).

The line synchronization syncX thus selected causes the reset of the TS-COUNTER and the storing of the content of channel 0 in the Tso-S/P register (more in particular only the three less significant bits defining the *bit-rate* received are stored).

The control logic selects the enable-byte (EnBxe) relevant to the concerned flow and on this basis, it reconstructs the code of the *bit-rate* to compare with that stored in the Tso-S/P register through the CCTSo comparator.

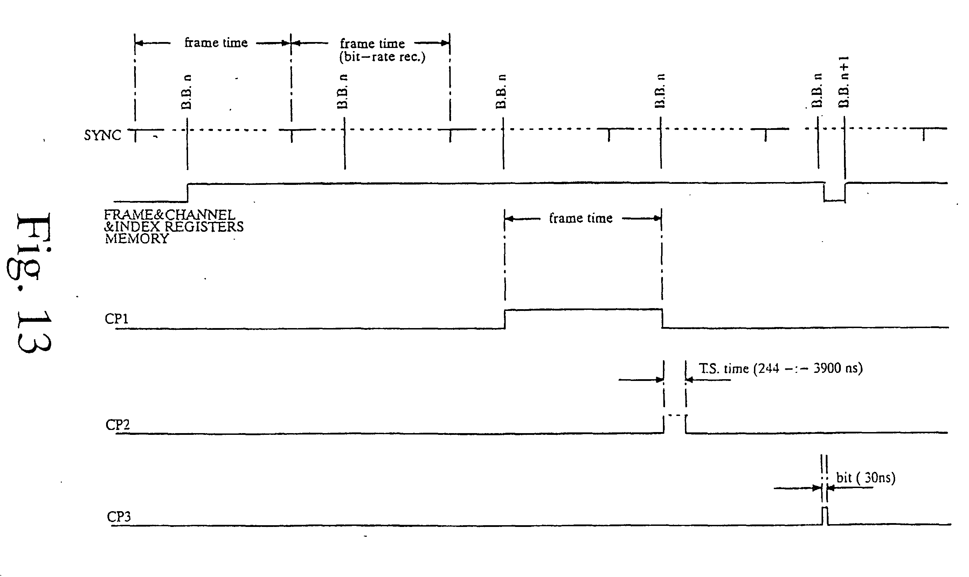

Two frames after the storing of the INDEX REGISTER, the comparator C.I.R. hastens the control logic to enable the CP1 signal, having 125μs duration as highlighted in the timing diagrams of Fig. 13, which enables the comparator C.TSX to identify the concerned channel and store it in the I-S/P REGISTER.

After additional 125μs (375 from storing of I.R.), the CP2 signal is enabled, equal to a T.S. as indicated in timing diagrams of Fig. 13, so to capture and store in O-S/P REGISTER the switched channel coming from the outgoing flow selected by MX-O controlled by the control logic.

The time of the CP2 signal is determined by the signal EnBxu 0-:-23 representing the outgoing *bit-rate* set.

At this point the control logic examines the status of comparators C.Cl-O and C.CTS$_o$ ; if their input result being equal, it waits for the third comparison of C.I.R. to enable the CP3 signal which resets the different internal circuits setting them for the re-examination of the possible presence of the B.B. in the next reading of the *command memory*; on the contrary if one at least is different, the alarm is enabled, supplying the BIM block with the information of the connection being tested, the relevant contents of the three S/P registers and the code of the reconstructed *bit-rate* of the control logic.

To check the effectiveness of the whole control, the E.C.B. bit is foreseen which can be activated by the control microprocessor when it wants and in the desired connection.

When active, it causes the storing in the O-S/P REGISTER of a byte completely reverse versus the one actually transmitted, causing the relevant expected alarms.

When a lining up of several elementary matrixes is realized on one or more lines/columns, to implement a switching matrix having larger size than that of the elementary matrix, the E.C.B. bit can be written on all the devices belonging to the same line or columns of the array.

This involves and answer from all the concerned devices. One device only (the one relevant to the connection) shall give wrong response with byte drawn at output negated versus the one drawn at input while all the other devices signal FF for the input and 00 for the output, performing a disconnection control.

Almost similar shall be the situation when in place of a connection a byte insertion has to be checked.

In this case the "in match" device (that is the one with the byte insertion) shall give wrong response with byte drawn at output and negated versus the byte inserted while all the other devices signal FF in place of the byte inserted and 00 at output.

*BIM BLOCK - Microprocessor Interface Block*

This block includes the signal control logic of the microprocessor, the register logic, the decoding of the operating code with relevant control and the state machine.

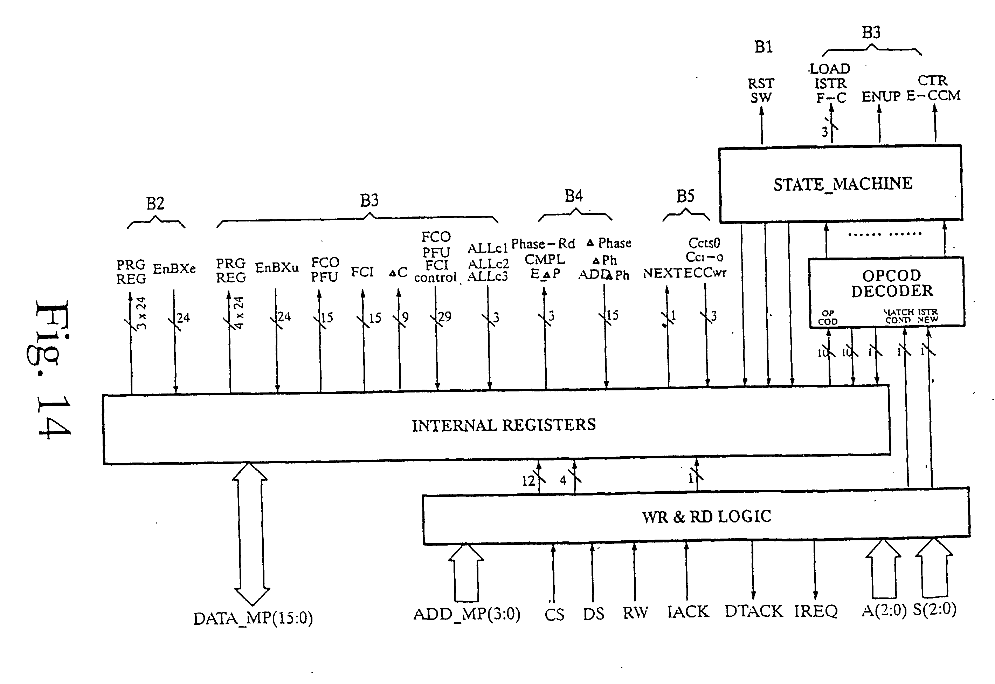

More in particular, referring to Fig. 14, this block includes:

- A writing and reading logic WR RD LOGIC which through control signals received (CS, DS, RW, JACK) and transmitted (DTACK, IREQ) dialogues with the control microprocessor according to defined specifications. Signals A and S are used to evaluate the match/no match condition, useful to adequately perform the operations requested by the μP.
- Internal registers INTERNAL REGISTERS divided into reading/writing, only writing registers and reading registers.
- A decoder of the operating code of the instruction requested OPCOD DECODER checking the validity of the code stored and, if accepted, enabling the appropriate internal signals considering also the match/no match condition.
- A state machine STATE-MACHINE which is enabled at any instruction according to which it evolves in one of the following directions:

    a) RD & WR operations on the *command memory*.
    b) writing of programming registers
    c) reset control.

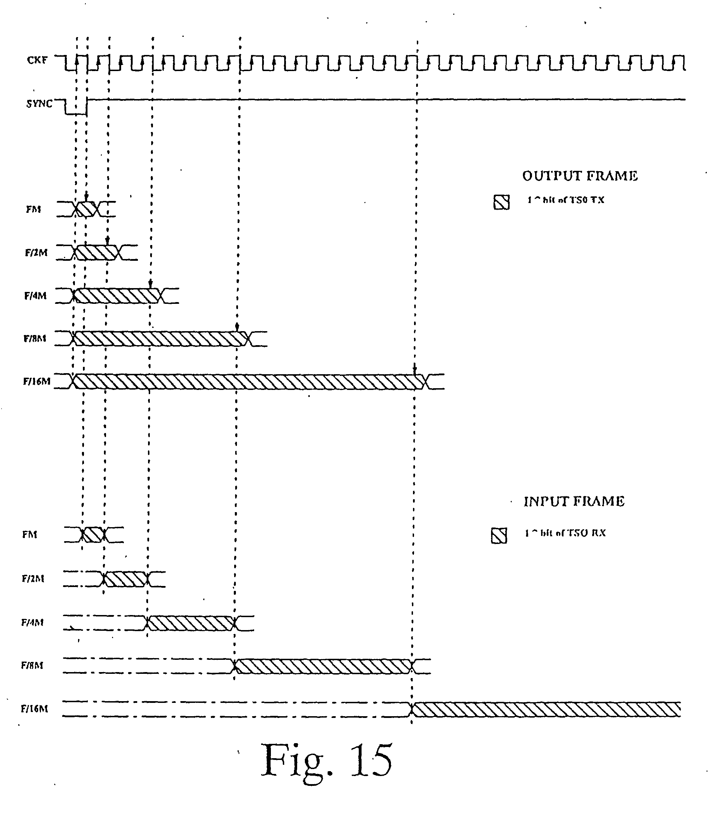

Fig. 15 shows a timing diagram of flows incoming and outgoing from an switching matrix of the invention.

As noticed in the realization example described above, each PCM integrated switching matrix allows, within some limits of the technological type only and which can be increased in new-generation devices, the control of input and output flows which can be programmed for different bit rates.

In addition to the scopes described above, this characteristic results particularly advantageous for GSM standard cellular telephone systems where, being two different operating rates foreseen (full-rate and half-rate) it is necessary to implement a switching system suitable to switch single bits instead of single bytes as it usually occurs.

Thanks to the above mentioned possibility to separately program the speed of input flows, in practice it is possible to supply a given input of the matrix with a flow showing a given speed (e.g. 2 Mbit/s) and destined to be switched bit by bit, programming switching operations of this flow as it showed a speed eight times higher (e.g. 16 Mbit/s). In this case the bit of the flow incoming at 2 Mbit/s is read eight times and considered as a 16 Kbit/s channel with eight bits equal among them.

Said channel, switched on an outgoing flow, it too programmed at 16 Mbit/s, is received as single bit of a 2 Mbit/s flow. In other words, due to the fact that the control microprocessor is programmed to determine switching operations at 16 Mbit/s speed while the data flow shows 2 Mbit/s speed, the switching matrix shall determine a switching of the single bits instead of the single bytes as it generally occurs.

Exploiting a line synchronization associated to each input flow, the matrix can manage flows not time aligned among them, without employing large elastic compensation memories.

The matrix of the invention enables to perform several connection/disconnection/insertion bytes on adjacent time slots, allowing to control the switching of a whole flow with a sole command.

The constant cyclic control of the correct connection/disconnection/insertion byte, and of the correct bit-rate of entering flows without the use of external auxiliary devices, considerably restricts the working of the control microprocessor of the switching network.

The synchronization of more remote receivers is possible due to the fact that time marks can be included in all outgoing flows.

While a particular embodiment of the present invention has been shown and described, it should be understood that the present invention is not limited thereto since other embodiments may be made by those skilled in the art without departing from the scope thereof. It is thus contemplated that the present invention encompasses any and all such embodiments covered by the following claims.

**Claims**

1. PCM elementary switching matrix for a number N of input flows, each containing a number K of channels and a number M of output flows each containing a number of H channels, including

    serial/parallel converters (S/P) for each one of said N input flows, at least a first RAM memory, referred to as speech memory, for storing in a same number of addressable portions of said speech memory, numeric samples of the different channels of said input flows,

    at least a second RAM memory, referred to as command memory, for storing the connection combinations between said pluralities of incoming and outgoing channels as pointing addresses of the relevant data stored in said speech memory,

    a parallel/serial converter (P/S) for each one of said output flows,

    an interface circuit (BIM) for a microprocessor for connection control, means (BCC) consisting of a logic circuit slaved to an external microprocessor cyclically

    controlling correctness of all the connections stored in said command memory and of the transfer of data from one of said incoming channels to the currently selected outgoing channel,

    **characterized by**

    the bit-rate of said input and/or output flows being separately programmed and the matrix including receipt and timing distribution means (BR_DT) suitable to receive an external clock signal (CkF) and to generate a plurality of timing signals consistent with the bit-rate of input and output flows independently selectable by programming;

    each memory location of said command memory containing in addition to channel and input flow indications the following control fields:

    - one Busy-bit (B.B.) to establish connection,
    - one Error Connection Bit (E.C.B.) to force a false condition of wrong connection,
    - one Link Control Bit 8L.C.B.) to enable also the control of the bit-rate of the received flow during the normal control of a given connection,

        said means for controlling correctness of connections including:

    - one frame and channels register (FRAME / CHANNEL REGISTER) storing the content of a memory location of said command memory having an active Busy Bit (B.B.),
    - one address register (INDEX REGISTER) for storing the address of a memory location of said command memory in presence of an active Busy Bit (B.B.),
    - first selection means (MX-I) connected upstream of said speech memory and controlled by a combinatorial logic circuit (COMBINATORIAL LOGIC) which in response to specific signals produces the following:

        i) a given flow on a first output;
        ii) a given synchronization signal on a second output;
        iii) a given sequence of timing clock and byte-pulses on a third output;

    - a counting circuit (TS COUNTER) reset by the third output of said first selection means (MX-I);
    - a first serial/parallel converter (Tso-S/P REGISTER) for storing bits of the timing channel 0 of the flow corresponding to the first output of said first selection means (MX-I);

- a control logic (CONTROL LOGIC) for reconstructing a code representing the bit-rate of the selected flow;
- first comparison means (CCTSo) for comparing the content of said first serial/parallel converter (Tso-S/P REGISTER) with said reconstructed code;
- second comparison means for identifying the channel being verified by comparing the content of said counting circuit (TS COUNTER) and a code reconstructed by said combinatorial logic circuit (COMBINATORIAL LOGIC)
- a second serial/parallel converter (I-S/P REGISTER) for storing the content of the channel being verified in response to the receipt of an enabling signal produced by said second comparison means (CTSx);
- second selection means (MX-O) connected downstream of said command memory for making available at an output the content of the channel being verified;
- a third serial/parallel converter (O-S/P REGISTER) connected to the output of said second selection means (MX-O),
- third comparison means (CCI-O) for comparing the output of said third serial/parallel converter (O-S/P REGISTER) with the output of said second serial/parallel converter (I-S/P REGISTER), said control logic obtaining indications on the correctness of a connection from the output state of said first and third comparison means (CCTSo, CCI-O).

2. The matrix according to claim 1, **characterized in that** it includes means for writing in a third serial/parallel converter (O-S/P REGISTER) a byte of bits of inverted value in respect to the value of transmitted bits.

3. The matrix according to claim 1, **characterized in that** it includes one or more bistable sampling circuits (B) connected in cascade and in a number that is sequentially incremented for each flow of said fractional number of input flows for phase shifting said input serial flows among each other and for producing a synchronization signal (SYNCx) for a respective programmable counter (COUNTER).

4. The matrix according to claim 1, **characterized in that** a writing/reading port of said command memory is associated a circuit including:

a first register/counter (F&CO) in which said circuit interface writes the address of the location to be written in the command memory, the register/counter having an input receiving a code representing the bit-rate of a respective output flow and enabling the counter function at a certain rate in function of said bit-rate;
a second register/counter (F&CI) in which said interface circuit writes the information to be written in the cell identified by the information contained in said first register/counter (F&CO), such a second register/counter having an input receiving a certain instruction (ICA) for the switching of data flows on adjacent channels, determining an increment of its content;
a counting circuit ($\Delta$C) in which said interface circuit, in presence of said particular instruction (ICA), load the number of channels involved by said switching on adjacent channels, the presence of any number in said counting circuit causing a decrement of its content and an increment of the content of said first and second register/counters (F&CO; F&CI).

5. The matrix according to claim 1, **characterized in that** it further includes:

synchronization means using the above mentioned synchronization internal signal (IN-SYNC) for generating two time marks (M.T.1, M.T.2), defining a period not shorter than that of the duration of a frame of PCM sig nals;
; insertion means of said time marks in one or more bits of a first time slot (TSO) corresponding to the first channel coming out of the relative output serial flow.

6. A PCM switching system employing a plurality of elementary switching matrixes according to any one of the claims 1 to 5, controlled by a connection control microprocessor, each elementary matrix enabling the switching of any one of a number K of channels of any N input flows on any one of said H channels of any one of an elementary matrix output M flows, under supervision of said connection control microprocessor, the connection control being cyclically made in a continuous way by comparing one byte captured from a certain incoming channel and one byte captured from the corresponding outgoing channel in which said byte is being transferred.

7. The switching system according to claim 6, where the K channels of said N input flows are not necessarily aligned to a local synchronization signal and **characterized in that** a channel counter, reset by a line synchronization signal, provides an independent synchronization information for each input flow.

8. The system according to claim 6, **characterized in that** it further includes means producing connection/disconnection/insertion bytes on adjacent time slots in response to instructions, enabling to control the switching of a whole flow with a single command.

9. The system according to claim 6, **characterized in that** it further includes means for inserting time marks for the simultaneous synchronization of remote receivers on each one of said M output flows.

**Patentansprüche**

1. Elementare PCM-Schaltmatrix für eine Anzahl N von Eingangsflüssen, welche jeweils eine Anzahl K von Kanälen enthalten, und eine Anzahl M von Ausgangsflüssen, welche jeweils eine Anzahl von H Kanälen enthalten, umfassend
   Serien-Parallel-Umsetzer (S/P) für jeden der N Eingangsflüsse, wenigstens einen ersten RAM-Speicher, der als Sprachspeicher bezeichnet wird, zum Speichern von numerischen Abtastwerten der verschiedenen Kanäle der Eingangsflüsse in einer selben Anzahl von adressierbaren Abschnitten des Sprachspeichers,
   wenigstens einen zweiten RAM-Speicher, der als Befehlsspeicher bezeichnet wird, zum Speichern der Verbindungskombinationen zwischen den Mehrzahlen von ankommenden und abgehenden Kanälen als Verweisadressen der relevanten Daten, welche im Sprachspeicher gespeichert sind,
   einen Parallel-Serien-Umsetzer (P/S) für jeden der Ausgangsflüsse,
   eine Schnittstellenschaltung (BIM) für einen Mikroprozessor zur Verbindungssteuerung,
   Mittel (BCC), welche aus einer Logikschaltung, die einem externen Mikroprozessor untergeordnet ist, bestehen und die Fehlerfreiheit aller Verbindungen, welche im Befehlsspeicher gespeichert sind, und der Übertragung von Daten von einem der ankommenden Kanäle an den gegenwärtig ausgewählten abgehenden Kanal zyklisch steuern,
   **dadurch gekennzeichnet, dass**
   die Bitrate der Eingangs- und/oder Ausgangsflüsse getrennt programmiert wird und die Matrix Empfangsund Zeitgabeverteilungsmittel (BR_DT) umfasst, welche geeignet sind, ein externes Taktsignal (CFK) zu empfangen und eine Mehrzahl von Zeitgabesignalen zu erzeugen, die mit der Bitrate von Eingangs- und Ausgangsflüssen, welche durch Programmieren unabhängig auswählbar ist, im Einklang stehen;
   jede Speicherstelle des Befehlsspeichers zusätzlich zu Kanal- und Eingangsflussangaben die folgenden Steuerfelder enthält:

   - ein Belegtbit (B.B.), um eine Verbindung herzustellen,

   - ein Fehlerverbindungsbit (E.C.B.), um einen Fehlzustand einer Falschverbindung zu erzwingen,

   - ein Übertragungssteuerungsbit (L.C.B.), um die Steuerung der Bitrate des empfangenen Flusses auch während des Normalbetriebs einer bestimmten Verbindung zu ermöglichen;

   die Mittel zum Steuern der Fehlerfreiheit von Verbindungen umfassen:

   - ein Rahmen- und Kanalregister (FRAME / CHANNEL REGISTER), welches den Inhalt einer Speicherstelle des Befehlsspeichers mit einem aktiven Belegtbit (B.B.) speichert,

   - ein Adressregister (INDEX REGISTER) zum Speichern der Adresse einer Speicherstelle des Befehlsspeichers bei Vorhandensein eines aktiven Belegtbits (B.B.),

   - erste Auswahlmittel (MX-I), welche dem Sprachspeicher vorgeschaltet sind und durch eine kombinatorische Logikschaltung (COMBINATORIAL LOGIC) gesteuert werden, die als Reaktion auf spezifische Signale Folgendes erzeugt:

      i) einen bestimmten Fluss auf einem ersten Ausgang;

      ii) ein bestimmtes Synchronisationssignal auf einem zweiten Ausgang;

      iii) eine bestimmte Sequenz von Zeittakt- und Byte-Impulsen auf einem dritten Ausgang;

- eine Zählschaltung (TS COUNTER), welche durch den dritten Ausgang der ersten Auswahlmittel (MX-I) zurückgestellt wird;

- einen ersten Serien-Parallel-Umsetzer (Tso-S/P REGISTER) zum Speichern von Bits des Zeitgabekanals 0 des Flusses, welcher dem ersten Ausgang der ersten Auswahlmittel (MX-I) entspricht;

- eine Steuerlogik (CONTROL LOGIC) zum Rekonstruieren eines Codes, welcher die Bitrate des ausgewählten Flusses darstellt;

- erste Vergleichsmittel (CCTSo) zum Vergleichen des Inhalts des ersten Serien-Parallel-Umsetzers (Tso-S/P REGISTER) mit dem rekonstruierten Code;

- zweite Vergleichsmittel zum Identifizieren des Kanals, welcher überprüft wird, durch Vergleichen des Inhalts der Zählschaltung (TS COUNTER) mit einem Code, der durch die kombinatorische Logikschaltung (COMBINATORIAL LOGIC) rekonstruiert wurde;

- einen zweiten Serien-Parallel-Umsetzer (I-S/P REGISTER) zum Speichern des Inhalts des Kanals, welcher überprüft wird, als Reaktion auf den Empfang eines Freigabesignals, das durch die zweiten Vergleichsmittel (CTSx) erzeugt wurde;

- zweite Auswahlmittel (MX-O), welche dem Befehlsspeicher nachgeschaltet sind, zum Verfügbarmachen des Inhalts des Kanals, welcher überprüft wird, an einem Ausgang;

- einen dritten Serien-Parallel-Umsetzer (O-S/P REGISTER), welcher an den Ausgang der zweiten Auswahlmittel (MX-O) angeschlossen ist;

- dritte Vergleichsmittel (CCI-O) zum Vergleichen des Ausgangs des dritten Serien-Parallel-Umsetzers (O-S/P REGISTER) mit dem Ausgang des zweiten Serien-Parallel-Umsetzers (I-S/P REGISTER), wobei die Steuerlogik aus dem Ausgangszustand der ersten und der dritten Vergleichsmittel (CCTSo, CCI-O) Angaben über die Fehlerfreiheit einer Verbindung erhält.

2. Matrix nach Anspruch 1, **dadurch gekennzeichnet, dass** sie Mittel zum Schreiben eines Bytes von Bits von umgekehrtem Wert in Bezug auf den Wert von übertragenen Bits in einen dritten Serien-Parallel-Umsetzer (O-S/P REGISTER) umfasst.

3. Matrix nach Anspruch 1, **dadurch gekennzeichnet, dass** sie eine oder mehr bistabile Abtastschaltungen (B), welche in Kaskade geschaltet und in einer Anzahl sind, die für jeden Fluss der Teilanzahl von Eingangsflüssen fortlaufend zunimmt, zum Verschieben der Phasen der seriellen Eingangsflüsse untereinander und zum Erzeugen eines Synchronisationssignals (SYNCx) für einen jeweiligen programmierbaren Zähler (COUNTER) umfasst.

4. Matrix nach Anspruch 1, **dadurch gekennzeichnet, dass** ein Schreib/Lese-Port des Befehlsspeichers mit einer Schaltung verbunden ist, welche umfasst:

einen ersten Register-Zähler (F&CO), in welchen die Schnittstellenschaltung die Adresse der Stelle schreibt, die in den Befehlsspeicher zu schreiben ist, wobei der Register-Zähler einen Eingang aufweist, welcher einen Code empfängt, der die Bitrate eines jeweiligen Ausgangsflusses darstellt und die Zählerfunktion bei einer bestimmten Rate in Abhängigkeit von der Bitrate auslöst;

einen zweiten Register-Zähler (F&CI), in welchen die Schnittstellenschaltung die Information schreibt, die in die Zelle zu schreiben ist, welche durch die Information identifiziert wird, die im ersten Register-Zähler (F&CO) enthalten ist, wobei solch ein Register-Zähler einen Eingang aufweist, welcher eine bestimmte Anweisung (ICA) zum Umschalten von Datenflüssen auf benachbarte Kanäle empfängt und eine Zunahme seines Inhalts feststellt;

eine Zählschaltung (ΔC), in welche die Schnittstellenschaltung bei Vorhandensein der jeweiligen Anweisung (ICA) die Anzahl von Kanälen lädt, welche durch das Umschalten auf benachbarte Kanäle beteiligt sind, wobei das Vorhandensein jeglicher Anzahl in der Zählschaltung eine Verminderung ihres Inhalts und eine Zunahme des Inhalts des ersten und des zweiten Register-Zählers (F&CO, F&CI) bewirkt.

5. Matrix nach Anspruch 1, **dadurch gekennzeichnet, dass** sie ferner umfasst:

   Synchronisationsmittel, welche das zuvor erwähnte interne Synchronisationssignal (IN-SYNC) zum Erzeugen von zwei Zeitmarken (M.T.1, M.T.2) verwenden, welche einen Zeitraum definieren, der nicht kürzer als der der Dauer eines Rahmens von PCM-Signalen ist;

   Einfügemittel der Zeitmarken in ein oder mehr Bits eines ersten Zeitschlitzes (TSO), welcher dem ersten Kanal entspricht, der aus dem relativen seriellen Ausgangsfluss kommt.

6. PCM-Schaltsystem, welches eine Mehrzahl von elementaren Schaltmatrizen nach einem der Ansprüche 1 bis 5 einsetzt, die durch einen Verbindungssteuerungsmikroprozessor gesteuert werden, wobei jede elementare Matrix unter der Aufsicht des Verbindungssteuerungsmikroprozessors das Umschalten jedes einer Anzahl K von Kanälen irgendwelcher N Eingangsflüsse auf jeden der H Kanäle irgendeines von M Ausgangsflüssen einer elementaren Matrix ermöglicht, wobei die Verbindungssteuerung auf eine kontinuierliche Weise durch Vergleichen eines Bytes, das von einem bestimmten ankommenden Kanal erfasst wird, mit einem Byte, das vom entsprechenden abgehenden Kanal erfasst wird, in welchem das Byte übertragen wird, zyklisch erfolgt.

7. Schaltsystem nach Anspruch 6, wobei die K Kanäle der N Eingangsflüsse nicht unbedingt auf ein lokales Synchronisationssignal abgestimmt sind, und **dadurch gekennzeichnet, dass** ein Kanalzähler, welcher durch ein Leitungssynchronisationssignal zurückgestellt wird, eine unabhängige Synchronisationsinformation für jeden Eingangsfluss bereitstellt.

8. System nach Anspruch 6, **dadurch gekennzeichnet, dass** es ferner Mittel umfasst, welche Verbindungs/Trennungs-/Einfügebytes auf benachbarten Zeitschlitzen als Reaktion auf Anweisungen erzeugen, welche es ermöglichen, das Umschalten eines ganzen Flusses mit einem einzigen Befehl zu steuern.

9. System nach Anspruch 6, **dadurch gekennzeichnet, dass** es ferner Mittel zum Einfügen von Zeitmarken für die gleichzeitige Synchronisation von fernen Empfängern auf jedem der M Ausgangsflüsse umfasst.

**Revendications**

1. Matrice de commutation élémentaire en modulation par impulsions et codage (PCM) pour un nombre N de flux d'entrée, contenant chacun un nombre K de canaux, et un nombre M de flux de sortie, contenant chacun un nombre H de canaux, incluant
   des convertisseurs parallèles/en série (S/P) pour chacun desdits flux d'entrée N, au moins une première mémoire vive (RAM), désignée sous le terme de mémoire vocale, pour stocker dans un même nombre de portions adressables de ladite mémoire vocale, des échantillons numériques des différents canaux desdits flux d'entrée,
   au moins une seconde mémoire vive (RAM), désignée sous le terme de mémoire de commandes, pour stocker les combinaisons de connexions entre lesdites pluralités de canaux entrants et sortants comme adresses qui pointent sur les données pertinentes stockées dans ladite mémoire vocale,
   un convertisseur parallèle/en série (P/S) pour chacun desdits flux de sortie,
   un circuit d'interface (BIM) pour un microprocesseur effectuant les commandes de connexion,
   un moyen (BCC) composé d'un circuit logique asservi à un microprocesseur externe qui contrôle de manière cyclique l'exactitude des connexions stockées dans ladite mémoire de commandes et le transfert de données d'un desdits canaux entrants vers le canal sortant actuellement sélectionné,
   **caractérisé en ce que**
   le débit binaire desdits flux d'entrée et/ou sortie est programmé de manière séparée et la matrice inclut des moyens de distribution de rythme et de réception (BR_DT) aptes à recevoir un signal d'horloge externe (Ckf) et à générer une pluralité de signaux de rythme conformément au débit binaire des flux d'entrée et de sortie qui peuvent être sélectionnés indépendamment au moyen d'une programmation ;
   chaque emplacement de mémoire de ladite mémoire de commandes contient, en plus des indications de flux d'entrée et de canal, les champs de commande suivants:

   - un bit BB (Busy-bit) pour établir la connexion,

   - un bit d'erreur de connexion (ECB) pour refouler l'exécution incorrecte d'une mauvaise connexion,

- un bit de commande de liaison (8LCB) pour permettre également le réglage du débit binaire du flux reçu pendant l'exécution normale d'une connexion donnée,

ledit moyen de contrôle de l'exactitude des connexions incluant :

- un registre de canaux et de trame (FRAME/CHANNEL REGISTER)qui stocke le contenu d'un emplacement de mémoire de ladite mémoire de commandes ayant un bit BB (Busy-bit) actif,

- un registre d'adresses (INDEX REGISTER) pour stocker l'adresse d'un emplacement de mémoire de ladite mémoire de commandes en présence d'un bit BB (Busy-bit) actif,

- un premier moyen de sélection (MX-I) connecté en amont de ladite mémoire vocale et commandé par un circuit logique combinatoire (COMBINATORIAL LOGIC) lequel, en réponse à des signaux spécifiques, produit ce qui suit :

  i) un flux donné sur une première sortie ;

  ii) un signal de synchronisation donné sur une seconde sortie ;

  iii) une séquence donnée de rythmes d'horloge et d'impulsions binaires sur une troisième sortie ;

- un circuit de comptage (TS COUNTER) réinitialisé par la troisième sortie dudit premier moyen de sélection (MX-I);

- un convertisseur parallèle/en série (Tso-S/P REGISTER) pour stocker des bits du premier canal de rythme 0 du flux correspondant à la première sortie dudit premier moyen de sélection (MX-I) ;

- une logique de commande (control logic) pour reconstruire un code représentant le débit binaire du flux sélectionné ;

- un premier moyen de comparaison (CCTso) pour comparer le contenu dudit premier convertisseur parallèle/ en série (Tso-S/P REGISTER) avec ledit code reconstruit ;

- un second moyen de comparaison pour identifier le canal qui est en train d'être vérifié en comparant le contenu dudit circuit de comptage (TS COUNTER) et un code reconstruit par ledit circuit logique combinatoire (COMBINATORIAL LOGIC) ;

- un second convertisseur parallèle/en série (I-S/P REGISTER)pour stocker le contenu du canal qui est en train d'être vérifié en réponse à la réception d'un signal de déblocage produit par ledit second moyen de comparaison (CTSx) ;

- un second moyen de sélection (MX-O) connecté en aval de ladite mémoire de commandes pour rendre disponible à une sortie le contenu du canal qui est en train d'être vérifié ;

- un troisième convertisseur parallèle/en série (O-S/P REGISTER) connecté à la sortie dudit second moyen de sélection (MX-O) ;

- un troisième moyen de comparaison (CGI-O) pour comparer la sortie dudit troisième convertisseur parallèle/ en série (O-S/P REGISTER) avec la sortie dudit second convertisseur parallèle/en série (I-S/P REGISTER), ladite logique de commande obtenant des indications sur l'exactitude d'une connexion à partir de l'état de sortie desdits premier et troisième moyens de comparaison (CCTSo, CCI-O).

2. Matrice selon la revendication 1, **caractérisée en ce qu'**elle inclut des moyens pour écrire dans un troisième convertisseur parallèle/en série (O-S/P REGISTER) un multiplet de valeur inversée par rapport à la valeur des bits transmis.

3. Matrice selon la revendication 1, **caractérisée en ce qu'**elle inclut un ou plusieurs circuits d'échantillonnage bistable (B) connectés en cascade et incrémentés de manière séquentielle pour chaque flux dudit nombre de flux d'entrée pour provoquer un décalage de phase desdits flux d'entrée en série les uns parmi les autres et pour produire un signal de synchronisation (SYNCx) destiné à un compteur programmable respectif (COUNTER).

4. Matrice selon la revendication 1, **caractérisée en ce qu'**un port de lecture/écriture de ladite mémoire de commandes est associé à un circuit incluant:

   un premier compteur/registre (F&CO) dans lequel ledit circuit d'interface écrit l'adresse de l'emplacement qui doit être écrit dans la mémoire de commandes, le compteur/registre ayant une entrée qui reçoit un code représentant le débit binaire d'un flux de sortie respectif et qui débloque la fonction compteur à partir d'un certain débit en fonction dudit débit binaire ;

   un second compteur/registre (F&CO) dans lequel ledit circuit d'interface écrit l'information qui doit être écrite dans la cellule identifiée par l'information contenue dans le premier compteur/registre (F&CO), un tel second compteur/registre ayant une entrée qui reçoit une certaine instruction (ICA) pour commuter les flux de données sur des canaux adjacents, déterminant un incrément de son contenu ;

   un circuit de comptage (ΔC) dans lequel ledit circuit d'interface, en présence de ladite instruction particulière (ICA), charge le nombre de canaux intervenant dans ladite commutation sur des canaux adjacents, la présence d'un quelconque nombre dans ledit circuit de comptage provoquant un décrément de son contenu et un incrément du contenu desdits premier et second compteur/registre( F&CO ; F&CI).

5. Matrice selon la revendication 1, **caractérisée en ce qu'**elle inclut en outre :

   un moyen de synchronisation utilisant le signal interne de synchronisation (IN-SYNC) mentionné ci-dessus pour générer deux marques temporelles (MT1, MT2) qui définissent une période qui ne soit pas inférieure à la durée d'une trame de signaux PCM;

   un moyen d'insertion desdites marques temporelles dans un ou plusieurs bits d'un premier intervalle de temps (TSO) correspondant au premier canal sortant du flux de sortie relatif en série.

6. Système de commutation en modulation par impulsions et codage (PCM) employant une pluralité de matrices de commutation élémentaires selon l'une quelconque des revendications 1 à 5, commandé par un microprocesseur de commande de connexion, chaque matrice élémentaire permettant la commutation d'un nombre K de canaux de flux d'entrée N sur un desdits canaux H des flux de sortie de matrice élémentaire M, sous le contrôle dudit microprocesseur de commande de connexion, la commande de connexion étant effectuée en continu de manière cyclique en comparant un octet isolé dans un certain canal entrant et un octet isolé dans le canal sortant correspondant, dans lequel ledit octet est en cours de transfert.

7. Système de commutation selon la revendication 6, où les canaux K desdits flux d'entrée N ne sont pas nécessairement alignés sur un signal de synchronisation locale et **caractérisé en ce qu'**un compteur de canal, réinitialisé par un signal de synchronisation de ligne, fournit une information de synchronisation indépendante pour chaque flux d'entrée.

8. Système selon la revendication 6, **caractérisé en ce qu'**il inclut en outre un moyen pour produire des octets d'insertion/déconnexion/connexion sur des intervalles de temps adjacents en réponse à des instructions, ce qui permet de commander la commutation d'un flux entier avec une commande unique.

9. Système selon la revendication 8, **caractérisé en ce qu'**il inclut en outre un moyen pour insérer des marques temporelles pour la synchronisation simultanée de récepteurs distants sur chacun desdits flux de sortie M.

Fig. 1

17

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

OUTPUT FRAME

◩ 1^ bit of TS0 TX

INPUT FRAME

◩ 1^ bit of TS0 RX

Fig. 15